# EUROPÄISCHE PATENTANMELDUNG

(11) **EP 0 678 558 A1**
(43) Veröffentlichungstag der Anmeldung: **25.10.1995**
(21) Anmeldenummer: 95105176.2
(22) Anmeldetag: 06.04.1995
(51) Int. Cl.: C09B 67/04, C09B 67/10, C09D 7/12

(54) **Feinverteilungsverfahren zur Herstellung von Kupferphthalocyaninpigmenten**

(30) Priorität: 21.04.1994 DE 4413848
(71) Anmelder: HOECHST AKTIENGESELLSCHAFT, D-65929 Frankfurt am Main (DE)
(72) Erfinder: Urban, Manfred, D-65205 Wiesbaden (DE)

(57) **Zusammenfassung**

Kupferphthalocyaninpigmente werden in ökologisch und ökonomisch vorteilhafter Weise feinverteilt, indem man grobkristalline Kupferphthalocyaninrohpigmente zunächst einer Trockenmahlung unterwirft und die dabei erhaltenen feinteiligen Präpigmente in wäßriger Suspension und unter Zusatz von 0,1 bis 5 Gew.-%, bezogen auf das gesamte Mahlgut, eines in Bezug auf die Verfahrensbedingungen inerten organischen Lösemittels auf einer Rührwerkskugelmühle, die mit einer Leistungsdichte von mehr als 2,5 kW pro Liter Mahlraum und einer Rührwerksumfangsgeschwindigkeit von mehr als 12 m/s betrieben wird, unter der Einwirkung von Mahlkörpern vom Durchmesser kleiner oder gleich 1 mm naßvermahlt.

Auf diese Weise hergestellte Kupferphthalocyaninpigmente eignen sich besonders als Farbmittel zum Pigmentieren von Lacken, Druckfarben und Kunststoffen.

## Beschreibung

Die vorliegende Erfindung liegt auf dem Gebiet der Kupferphthalocyaninpigmente.
Kupferphthalocyaninpigmente dienen als Farbmittel zum Pigmentieren von hochmolekularen Materialien, wie Lacken, Druckfarben und Kunststoffen.

Phthalocyaninpigmente sind seit langem bekannt. Sie werden durch Feinverteilungs- und Finishverfahren aus den bei der Synthese anfallenden grobkristallinen Rohpigmenten hergestellt. Solche Feinverteilungs- und Finishverfahren sind z.B. Acidpasting-, Trockenmahl- und Naßmahlverfahren.
Auch Kombinationen dieser Verfahren werden beschrieben. Zur Verbesserung der Reinheit und der Nuance ist es in einigen Fällen erforderlich, vor der Feinverteilung die Rohpigmente zu reinigen, beispielsweise durch Umlösen mit Schwefelsäure.

Die Überführung der grobkristallinen Rohpigmente in die Pigmentform ist in den nachfolgend aufgeführten Dokumenten beschrieben:
Die US-PS 4 257 951 beschreibt ein zweistufiges Trocken- und Naßmahlverfahren zur Herstellung von Kupferphthalocyaninpigmenten. Hierbei gelangen anorganische Salze ins Abwasser, die wieder aufbereitet werden müssen. Aus diesem Grund ist dieses Verfahren unwirtschaftlich. Weiterhin ist dort beschrieben, daß keine geeigneten Pigmente erhalten werden, wenn bei der Trockenmahlung auf das Salz und das Lösemittel verzichtet wird.

Die US-PS 4 024 154 beschreibt ebenfalls ein zweistufiges Trocken- und Naßmahlverfahren zur Herstellung von Kupferphthalocyaninpigmenten. Hierbei werden die grobkristallinen Rohpigmente in einer Rollmühle trocken vorvermahlen und anschließend in einer Rollmühle in Gegenwart von geringen Mengen eines aliphatischen Kohlenwasserstoffs und anorganischen Salzen wäßrig vermahlen. Wegen der extrem langen Mahlzeiten bei der Naßmahlung ist dieses Verfahren unwirtschaftlich. Außerdem gelangen anorganische Salze und Säuren ins Abwasser, die wieder aufbereitet werden müssen.

Die EP-A-0 408 499 beschreibt ein Verfahren zur Konditionierung von organischen Pigmenten durch Trockenmahlung der grobkristallinen Rohpigmente mit Salzzusatz oder Naßmahlung der grobkristallinen Rohpigmente ohne Salzzusatz, jeweils in Gegenwart von mikronisierten Wachsen. Im Falle der Trockenmahlung mit Salzzusatz fallen große Mengen Salz im Abwasser an, weshalb diese Arbeitsweise teuer und ökologisch bedenklich ist. Unter den angegebenen Bedingungen der Naßmahlung können jedoch keine transparenten und farbstarken Kupferphthalocyaninpigmente für den Kunststoffsektor aus hochkristallinen Kupferphthalocyaninrohpigmenten hergestellt werden.

Die Verwendung von Wachsen zur Verbesserung der anwendungstechnischen Eigenschaften in Kunststoffen ist in der DE-A-2 049 225 beschrieben. Die Herstellung von leicht verteilbaren Pigmenten für den Einsatz in thermoplastischen Kunststoffen erfolgt durch Mischen der Pigmente mit Wachsdispersionen in Mischern oder Kollermühlen.

Verfahren, nach denen farbstarke und leicht dispergierbare Kupferphthalocyaninpigmente umweltfreundlich und ohne Anfall von belastenden Abwässern mit geringen Mengen organischer Lösemittel hergestellt werden können, sind bisher nicht bekannt geworden.

In EP-A-0 574 792 wird ein Verfahren zur Herstellung von Kupferphthalocyaninpigmentzubereitungen der α-Phase beschrieben, die unter Phasenumwandlung aus Kupferphthalocyaninrohpigmenten der β-Phase hergestellt werden, indem man unter Verzicht auf einen Trockenmahlungsschritt eine Naßmahlung der genannten β-Modifikation vornimmt. Ein ähnliches Verfahren ist in EP-A-0 574 790 beschrieben, wobei jedoch unter phasenerhaltenden Bedingungen gearbeitet wird. Aus den beiden genannten Verfahren resultieren jedoch Phthalocyaninpigmente, die hinsichtlich ihrer Farbstärke und Dispergierbarkeit in Kunststoffen noch zu wünschen übrig lassen. Außerdem werden große Mengen Lösemittel eingesetzt, die wieder regeneriert werden müssen.

Aufgabe der vorliegenden Erfindungen war es, ein Verfahren zur Feinverteilung von Kupferphthalocyaninrohpigmenten zur Verfügung zu stellen, das insbesondere die ökologischen und ökonomischen Nachteile von bereits bekannten Feinverteilungsverfahren für Kupferphthalocyaninrohpigmente vermeidet und gute anwendungstechnische Eigenschaften von Kupferphthalocyaninpigmenten insbesondere in Kunststoffen liefert.

Es wurde überraschenderweise gefunden, daß man farbstarke und leicht dispergierbare Kupferphthalocyaninpigmente wirtschaftlich und umweltfreundlich herstellen kann, wenn man die bei der Synthese oder bei der Reinigung grobkristallin anfallenden Kupferphthalocyaninrohpigmente, gegebenenfalls in Gegenwart von Mahlhilfsmitteln, trocken vermahlt und die dabei erhaltenen feinteiligen, meist stark agglomerierten Präpigmente einer Naßmahlung in Gegenwart von geringen Mengen organischer Lösemittel unterwirft und danach isoliert.

Gegenstand der vorliegenden Erfindung ist ein Verfahren zur Feinverteilung von Kupferphthalocyaninrohpigmenten, dadurch gekennzeichnet, daß man grobkristalline Kupferphthalocyaninrohpigmente zunächst einer Trockenmahlung unterwirft und die dabei erhaltenen feinteiligen Präpigmente in wäßriger Suspension und unter Zusatz von 0,1 bis 5 Gew.-%, bezogen auf das gesamte Mahlgut, eines in Bezug auf die Verfahrensbedingungen inerten organischen Lösemittels auf einer Rührwerkskugelmühle, die mit einer Leistungsdichte von mehr als 2,5 kW pro Liter Mahlraum und einer Rührwerksumfangsgeschwindigkeit von mehr als 12 m/s betrieben wird, unter der Einwirkung von Mahlkörpern vom Durchmesser kleiner oder gleich 1 mm naßvermahlt.

Für die Trockenmahlung werden zweckmäßigerweise die bei der Synthese, beispielsweise nach der DE-A-2 256 485 und der US-PS 2 964 532 erhaltenen Rohpigmente oder die nach der Schwefelsäurereinigung gemäß der DE-A-2 439 983 und der US-PS 2 284 685 anfallenden hochkristallinen Kupferphthalocyaninrohpigmente der α- oder β-Phase eingesetzt, die unsubstituiert sind oder 1 bis 4 Sulfonsäure- oder Carbonsäuregruppen im Molekül enthalten. Als Rohpigmente können weiterhin Kupferphthalocyanine eingesetzt werden, die halogenfrei sind oder 1 bis 15 Chloratome und/oder 1 bis 12 Bromatome enthalten. Es können auch Mischungen der genannten Rohpigmente eingesetzt werden.

Zur Ermittlung der am besten geeigneten Mahlbedingungen sind Vorversuche notwendig. Für den physikalischen Zustand der Rohpigmente sind die Reinheit, die Kristallgröße, die Kristallgüte und die Kristallmodifikation entscheidend.
Im allgemeinen müssen reine und hochkristalline Rohpigmente länger gemahlen werden als verunreinigte und im Kristallgitter gestörte Pigmente.

In einer bevorzugten Ausführungsform des erfindungsgemäßen Verfahrens wird vor der Trockenmahlung mindestens eines der nachstehend genannten Additive als Mahlhilfsmittel, vorzugsweise ein Wachs, zugesetzt. Von Interesse sind alle bekannten Wachse und deren Gemische, insbesondere Säurewachse, Esterwachse, Amidwachse, Kohlenwasserstoffwachse und Polyolefinwachse.
Sie werden bevorzugt in einer Menge von 0,1 bis 10 Gew.-%, insbesondere 2,5 bis 7,5 Gew.-%, bezogen auf das eingesetzte Rohpigment, eingesetzt. Die Zugabe der Wachse kann auf einmal oder in mehreren Portionen erfolgen. Die Wachse können nach der Mahlung im Pigment verbleiben.

Die Trockenmahlung erfolgt in einer diskontinuierlichen oder kontinuierlichen Schwing- oder Rollmühle unter nachstehend definierten milden Mahlbedingungen und bevorzugt bei niedrigem Mahlgutfüllgrad. Der Mahlgutfüllgrad wird definiert als das Verhältnis der Mahlgutmenge (Rohpigment und gegebenenfalls Additiv) zum freien Volumen der Mahlkörperschüttung (nur die Mahlkörper). Der Mahlgutfüllgrad liegt normalerweise bei weniger als 250 g Mahlgut pro Liter freiem Volumen der Mahlkörperschüttung, vorzugsweise bei 50 bis 150 g/l. Der Mahlgutfüllgrad kann auch höher liegen, jedoch können dann technische Probleme auftreten und in vielen Fällen wird das coloristische Ziel nicht erreicht.

Die Mahlung in der Schwingmühle erfolgt in der Weise, daß die Mahlkörper im wesentlichen nur rotierende Bewegungen ausführen und ihre kinetische Energie durch die Auswahl von Masse und Größe sowie durch Drehzahl (Frequenz) und Amplitude möglichst klein gehalten wird. Außerdem wird die Mühle mit einem hohen Anteil an Mahlkörpern betrieben. Der Mahlkörperfüllgrad, definiert als das Verhältnis des Volumens der Mahlkörperschüttung zum Mühlenvolumen, liegt bei mehr als 60 Vol.-%.

Eine Rollmahlung wird bei einem Mahlkörperfüllgrad von 40 bis 60 Vol.-% und zweckmäßigerweise mit 65 bis 75 % der kritischen Drehzahl durchgeführt.
Durch die Auswahl von Masse und Größe der Mahlkörper wird die kinetische Energie möglichst klein gehalten. Auch hier wird die Mühle vorzugsweise mit niedrigem Mahlgutfüllgrad betrieben.

Als Mahlkörper in einer Schwing- oder Rollmahlung werden Kugeln oder Zylinder aus Stahl, Korund, Porzellan, Steatit, Aluminiumoxid, Mischoxiden und Quarz mit einem Durchmesser von 3 bis 20 mm verwendet. Die genannten Mahlkörper sollten eine möglichst glatte porenfreie Oberfläche haben. Die Mahltemperatur liegt im allgemeinen unter 100°C. Die Mahldauer ist abhängig von den Feinheitsanforderungen an das Pigment. Die Verweilzeit des Mahlguts in der Schwingmühle liegt je nach geforderter Feinheit im allgemeinen zwischen 1 und 25 Stunden. Zweckmäßig erweist sich eine Dauer von 1 bis 15 Stunden, vorzugsweise 2 bis 8 Stunden. Die Verweilzeit des Mahlguts in der Rollmühle liegt je nach geforderter Feinheit im allgemeinen zwischen 5 und 100 Stunden.
Zweckmäßig erweist sich eine Dauer von 10 bis 30 Stunden, vorzugsweise 15 bis 25 Stunden.

Das Mahlgut kann neben den vorstehend erwähnten Komponenten noch weitere übliche Zusatzstoffe, beispielsweise geringe Mengen (bis etwa 5 Gew.-%) Wasser, Pigmentdispergatoren auf Basis von Pigmenten, Harze, Salze von Harzen und Extender enthalten. Die Zusatzstoffe und/oder Additive können auch in emulgierter, suspendierter und flüssiger Form eingesetzt werden, da pulverförmige Stoffe geringe Mengen (bis ca. 5 Gew.-%) an Flüssigkeit aufnehmen können, ohne sofort ihre Eigenschaft als pulverförmige Substanz zu verlieren. Zur Herabsetzung der Gefahr einer Staubexplosion können geringe Mengen anorganischer Salze zugesetzt werden. Besonders vorteilhaft ist es, Zusatzstoffe zu verwenden, die nach der Mahlung im Pigment verbleiben können. Die Salze der Fettsäuren und Harze können nach der Mahlung in die freien Säuren oder Harze überführt werden.

Die Zugabe der Zusatzstoffe kann vor, während oder nach der Trockenmahlung, aber auch während oder nach der Naßmahlrung, während oder nach der Isolierung, im letztgenannten Fall auch durch trockenes Mischen, vorgenommen werden. Der am besten geeignete Zeitpunkt muß zuvor durch orientierende Versuche ermittelt werden.
Da bei der Trockenmahlung auch in Gegenwart von Mahlhilfsmitteln neben der angestrebten Zerkleinerung der grobkristallinen Rohpigmentteilchen noch Agglomerationsvorgänge ablaufen, schließt sich an die Trockenmahlung noch eine Naßmahlung zur Dispergierung des agglomerierten Mahlguts an.

Für die Naßmahlung eignen sich alle diskontinuierlichen und kontinuierlichen Rührwerkskugelmühlen. Hierbei ist eine hohe Mahlwirkung erforderlich. Diese wird erreicht durch den Einsatz einer speziellen Ausführungsform der Rührwerkskugelmühle. Für eine Mahlung der gesuchten Effizienz sind besonders Rührwerkskugelmühlen geeignet, die zum diskontinuierlichen und kontinuierlichen Arbeitsablauf ausgelegt sind, einen zylinderförmigen oder hohlzylinderförmigen Mahlraum in horizontaler oder vertikaler Bauweise enthalten und mit einer spezifischen Leistungsdichte von über 2,5 kW pro Liter Mahlraum betrieben werden können und deren Rührwerksumfangsgeschwindigkeit mehr als 12 m/s beträgt.

Derartige Mühlen sind beispielsweise in der DE-OS 3 716 587 (US-PS 5 062 577) beschrieben. Die pro Zeiteinheit vom Rührwerk abgegebene Energie wird als Zerkleinerungsarbeit und als Reibungsenergie in Form von Wärme an das Mahlgut übertragen. Zur problemlosen Abführung dieser großen Wärmemenge muß durch konstruktive Vorkehrungen das Verhältnis von Mahlraum zu Mahlraumoberfläche (Kühlfläche) möglichst klein gehalten werden.
Wenn bei hohen Durchsätzen im Kreislauf gemahlen wird, kann die Wärme überwiegend über das Mahlgut nach außen abgeführt werden. Als Mahlkörper dienen beispielsweise Kugeln aus Zirkonoxid, Zirkonmischoxid, Aluminiumoxid oder Quarz mit einem Durchmesser kleiner als 1 mm; zweckmäßig werden Mahlkörper mit einem Durchmesser von 0,2 bis 0,8 mm, vorzugsweise 0,3 bis 0,5 mm, verwendet.

Beim Einsatz von kontinuierlichen Rührwerkskugelmühlen zum Feinverteilen erfolgt die Abtrennung der Mahlkörper vom Mahlgut vorzugsweise durch Zentrifugalabscheidung, so daß die Trennvorrichtungen von den Mahlkörpern praktisch nicht berührt werden, wodurch man Verstopfungen der Trennvorrichtungen weitgehend verhindern kann. Die Rührwerkskugelmühlen werden hierbei mit hohem Mahlkörperfüllgrad betrieben. Bei den kontinuierlichen Rührwerkskugelmühlen wird der Mahlraum praktisch vollständig mit Mahlkörpern ausgefüllt.

Zur Ermittlung der geeigneten Mahlbedingungen sind Vorversuche notwendig.
Die Mahlung wird im wäßrigen Medium unter Zusatz von 0,1 bis 5 Gew.-% eines organischen Lösemittels, bezogen auf das gesamte Mahlgut, in homogener Mischung durchgeführt. Dabei wird nur die zur Phasenerhaltung oder Phasenumwandlung notwendige Menge Lösemittel zugesetzt. Vorzugsweise wird die Mahlung im neutralen oder alkalischen pH-Bereich durchgeführt.

Die Präpigmentkonzentration im Mahlgut der Naßmahlung ist abhängig von der Rheologie der Suspension und beträgt zweckmäßigerweise höchstens 40 Gew.-%, vorzugsweise 5 bis 35 Gew.-%, insbesondere 10 bis 20 Gew.-%, der Mahlgutsuspension.

Als organische Lösemittel, die vorteilhaft der Mahlgutsuspension zugegeben werden, kommen in Frage: mit Wasser mischbare C₁-C₈-Alkanole wie Methanol, Ethanol, n-Propanol, Isopropanol, n-Butanol, tert.-Butanol, Isobutanol, Pentanol, Hexanol oder Alkylhexanole; cyclische Alkanole wie Cyclohexanol; C₁-C₅-Dialkylketone wie Aceton, Diethylketon, Methylisobutylketon oder Methylethylketon; Ether und Glykolether wie Tetrahydrofuran, Dimethoxyethan, Methylglykol, Ethylglykol, Butylglykol, Ethyldiglykol, Methoxypropanol oder Methoxybutanol; aliphatische Säureamide wie Formamid oder Dimethylformamid; cyclische Carbonsäureamide wie N-Methylpyrrolidon, Valero- oder Caprolactam oder Mischungen der genannten Lösemittel mit Wasser. Für Pigmente der β-Phase werden aromatische Kohlenwasserstoffe wie Toluol, Xylole oder Ethylbenzol; aromatische Halogenkohlenwasserstoffe, wie Chlorbenzol, o-Dichlorbenzol, 1,2,4-Trichlorbenzol oder Brombenzol, und substituierte Aromaten, wie z.B. Nitrobenzol oder Phenol, verwendet.

Die Naßmahlung wird bei Temperaturen im Bereich von 0 bis 100°C, zweckmäßig bei einer Temperatur zwischen 10 und 60°C, vorzugsweise bei 20 bis 50°C, durchgeführt.

Die Dauer der Naßmahlung ist abhängig von den Feinheitsanforderungen an das Pigment. Die Verweilzeit des Mahlguts in der Rührwerkskugelmühle liegt je nach geforderter Feinheit im allgemeinen zwischen 5 und 60 Minuten. Zweckmäßig erweist sich eine Dauer von 5 bis 45 Minuten, vorzugsweise 10 bis 30 Minuten.

Die nach der Naßmahlung vorliegenden feinteiligen Pigmente werden entweder direkt, oder nach der Abtrennung des Lösemittels, isoliert. Unter Isolieren wird üblicherweise das Abdestillieren des Lösemittels, Filtrieren und Waschen des Preßkuchens sowie anschließendes Trocknen der Pigmente verstanden.

Durch die Wahl des organischen Lösemittels, des Wachses und der Zusatzstoffe, deren Konzentrationen, der Auswahl der Temperatur und des pH-Werts lassen sich je nach dem gewünschten Verwendungszweck Kupferphthalocyaninpigmente herstellen, die entweder eine höhere Transparenz oder eine bessere Deckkraft besitzen. Sie sind insbesondere für die Pigmentierung von Kunststoffen, Lacken und Druckfarben geeignet.

Die Herstellung von Kupferphthalocyaninpigmenten nach dem erfindungsgemäßen Verfahren hat sich als besonders wirtschaftlich sowie umweltfreundlich erwiesen, weil bei der Feinverteilung der Rohpigmente durch salzfreie Trockenmahlung und anschließende Naßmahlung keine Verschmutzung der Abwässer durch Salze oder Säuren auftritt. Außerdem werden nur sehr geringe Mengen der vorstehend genannten Zusatzstoffe und Lösemittel eingesetzt, welche anschließend weiterverarbeitet oder die vollständig regeneriert werden können, so daß insgesamt keine Entsorgungsprobleme auftreten. Ein zusätzlicher Lösemittelfinish ist nicht unbedingt erforderlich, kann jedoch mit der vorhandenen geringen Menge an organischem Lösemittel durchgeführt werden.

Die nach der vorliegenden Erfindung erhältlichen Pigmente zeichnen sich aus durch ihre hervorragenden coloristischen Eigenschaften, insbesondere der Dispergierbarkeit, Transparenz, Farbstärke und Farbtonreinheit.

Die erfindungsgemäß hergestellten Pigmente lassen sich insbesondere zum Pigmentieren von hochmolekularen organischen Materialien natürlicher oder synthetischer Herkunft einsetzen, beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.

Dabei spielt es keine Rolle, ob die erwähnten hochmolekularen organischen Verbindungen als plastische Massen, Schmelzen oder in Form von Spinnlösungen, insbesondere von Polypropylen, Lacken, Anstrichstoffen oder Druckfarben vorliegen. Je nach Verwendungszweck erweist es sich als vorteilhaft, die erfindungsgemäß erhaltenen Pigmente als Verschnitte oder in Form von Präparationen oder Dispersionen zu benutzen. Bezogen auf das zu pigmentierende hochmolekulare organische Material setzt man die erfindungsgemäß hergestellten Pigmente in einer Menge von 0,1 bis 10 Gew.-% ein. Die erfindungsgemäß hergestellten Pigmente sind in vielen Anwendungsmedien leicht und bis zu hohen Feinheiten dispergierbar.

Mit diesen Pigmenten lassen sich Kunststoffe mit hoher Farbstärke und hoher Transparenz einfärben.

Zur Beurteilung der Eigenschaften der nach der vorliegenden Erfindung hergestellten Pigmente auf dem Kunststoffgebiet wurde aus der Vielzahl der bekannten Kunststoffe Weichpolyvinylchlorid (PVC) ausgewählt. Die Bestimmung der Ausblutechtheit erfolgte nach DIN 53775.

Zur Beurteilung der Eigenschaften der erfindungsgemäß hergestellten Pigmente auf dem Lacksektor wurden aus der Vielzahl der bekannten Lacke ein aromatenhaltiger Alkydmelaminharzlack (AM) auf Basis eines mittelöligen, nichttrocknenden Alkydharzes aus synthetischen Fettsäuren und Phthalsäureanhydrid sowie eines butanolveretherten Melaminharzes und Anteilen eines nichttrocknenden Alkydharzes auf Basis von Ricinussäure (kurzölig) ausgewählt. Die Bestimmung der Farbstärke und des Farbtons erfolgte nach DIN 55986.

Die Bestimmung der Kristallphase der Rohpigmente, Präpigmente und Pigmente erfolgte durch Röntgenspektroskopie. Die Aufnahme der Röntgenspektren wurde mit CuKα-Strahlung durchgeführt.

In den nachstehenden Beispielen beziehen sich Teile jeweils auf Gewichtsteile und Prozente jeweils auf Gewichtsprozente der beschriebenen Substanzen. CuPc bedeutet Kupferphthalocyanin.

### Beispiel 1:

In einen Kunststoffbehälter, der mit 1400 Teilen Steatitzylindern vom Durchmesser 12 mm und der Länge 12 mm als Mahlkörper zu 80 Vol.-% gefüllt ist, werden 30 Teile grobkristallines CuPc-Rohpigment (β-Phase) und 1,5 Teile Polyolefinwachs (Fp: 104°C, Molmasse 2000) eingefüllt. Es wird 4 Stunden lang unter Schütteln auf einer Schwingmühle (Typ Vibratom; Hersteller: Siebtechnik Mühlheim) bei 1400 Umdrehungen pro Minute, Schwingkreis 4 mm, fein vermahlen. Anschließend wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 89 Teilen Wasser, 1 Teil Xylol und 10 Teilen des aus der Schwingmahlung erhaltenen Präpigments, das eine Mischung aus α- und β-Phase ist, eindosiert und mit einer Rührwerksumfangsgeschwindigkeit von 15,6 m/s sowie einer spezifischen Leistungsdichte von 3,1 kW pro Liter Mahlraum 10 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt. Danach wird das Xylol mit Wasserdampf abdestilliert, das Pigment abgesaugt, mit Wasser gewaschen und bei 80°C getrocknet.

Man erhält 9,5 Teile CuPc-Pigment (β- Phase), das im Kunststoff (PVC) sehr gut dispergierbar ist und transparente und farbstarke Färbungen liefert. Die Ausblutechtheit ist einwandfrei. Im AM-Lack werden transparente und farbstarke Lackierungen erhalten.

### Beispiel 2:

In einen Kunststoffbehälter, der mit 2300 Teilen Stahlkugeln vom Durchmesser 10 mm als Mahlkörper zu 55 Vol.-% gefüllt ist, werden 30 Teile grobkristallines CuPc-Rohpigment (β-Phase) und 1,5 Teile Polyolefinwachs (Fp: 104°C, Molmasse 2000) eingefüllt. Es wird 24 Stunden lang bei 75 % der kritischen Drehzahl auf einem Rolltisch gemahlen. Anschließend wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 89,5 Teilen Wasser, 0,5 Teilen Chlorbenzol und 10 Teilen des aus der Rollmahlung erhaltenen Präpigments, das eine Mischung aus α- und β-Phase ist, eindosiert und mit einer Rührwerksumfangsgeschwindigkeit von 15,6 m/s sowie einer spezifischen Leistungsdichte von 3,1 kW pro Liter Mahlraum 10 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt. Danach wird das Chlorbenzol mit Wasserdampf abdestilliert, das Pigment abgesaugt, mit Wasser gewaschen und bei 80°C getrocknet.

Man erhält 9,5 Teile CuPc-Pigment (β-Phase), das im Kunststoff (PVC) sehr gut dispergierbar ist und transparente und farbstarke Färbungen liefert. Die Ausblutechtheit ist einwandfrei.

### Beispiel 3:

In einen Kunststoffbehälter, der mit 1400 Teilen Steatitzylindern vom Durchmesser 12 mm und der Länge 12 mm als Mahlkörper zu 80 Vol.-% gefüllt ist, werden 30 Teile grobkristallines CuPc-Rohpigment (β-Phase) und 1,5 Teile Polyolefinwachs (Fp: 104°C, Molmasse 2000) eingefüllt. Es wird 4 Stunden lang unter Schütteln auf einer Schwingmühle (Typ Vibratom; Hersteller: Siebtechnik Mühlheim) bei 1400 Umdrehungen pro Minute, Schwingkreis 4 mm, fein vermahlen. Anschließend wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen Wasser, 5 Teilen Methylethylketon und 10 Teilen des aus der Schwingmahlung erhaltenen Präpigments, das eine Mischung aus α- und β-Phase ist, eindosiert und mit einer Rührwerksumfangsgeschwindigkeit von 15,6 m/s sowie einer spezifischen Leistungsdichte von 3,1 kW pro Liter Mahlraum 10 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet.

Man erhält 9,5 Teile CuPc-Pigment (überwiegend α-Phase), das im Kunststoff (PVC) sehr gut dispergierbar ist und transparente und farbstarke Färbungen liefert.

### Beispiel 4:

In einen Kunststoffbehälter, der mit 2300 Teilen Stahlkugeln vom Durchmesser 10 mm als Mahlkörper zu 55 Vol.-% gefüllt ist, werden 30 Teile grobkristallines CuPc-Rohpigment (α-Phase) und 1,5 Teile Polyolefinwachs (Fp: 104°C, Molmase 2000) eingefüllt. Es wird 24 Stunden lang bei 75% der kritischen Drehzahl auf einem Rolltisch gemahlen. Anschließend wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen Wasser, 5 Teilen Methylethylketon und 10 Teilen des aus der Rollmahlung erhaltenen Präpigments, das in der α-Phase vorliegt, eindosiert und mit einer Rührwerksumfangsgeschwindigkeit von 15,6 m/s sowie einer spezifischen Leistungsdichte von 3,1 kW pro Liter Mahlraum 10 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt, abgesaugt, mit Wasser gewaschen und bei 80°C getrocknet.

Man erhält 9,4 Teile CuPc-Pigment (α-Phase), das im Kunststoff (PVC) sehr gut dispergierbar ist und transparente und farbstarke Färbungen liefert.

### Beispiel 5:

In einen Kunststoffbehälter, der mit 2300 Teilen Stahlkugeln vom Durchmesser 10 mm als Mahlkörper zu 55 Vol.-% gefüllt ist, werden 30 Teile grobkristallines CuPc-Rohpigment (α-Phase, mit 3,4 Gew.-% Chlorgehalt) und 1,5 Teile Polyolefinwachs (Fp: 104°C, Molmasse 2000) eingefüllt. Es wird 24 Stunden lang bei 75 % der kritischen Drehzahl auf einem Rolltisch gemahlen.
Anschließend wird das Mahlgut von den Mahlkörpern abgesiebt.

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen Wasser, 5 Teilen Isobutanol und 10 Teilen des aus der Rollmahlung erhaltenen Präpigments, das in der α-Phase vorliegt, eindosiert und mit einer Rührwerksumfangsgeschwindigkeit von 15,6 m/s sowie einer spezifischen Leistungsdichte von 3,1 kW pro Liter Mahlraum 10 Minuten lang bei 25°C gemahlen. Anschließend wird die Mahlgutsuspension von den Mahlkörpern abgesiebt, die Mahlkörper mit Wasser abgespült und die Mahlgutsuspensionen vereinigt. Danach wird das Isobutanol bis 100°C abdestilliert, abgesaugt, mit Wasser gewaschen und bei 80°C getrocknet.

Man erhält 9,6 Teile CuPc-Pigment (α-Phase, mit 3,4 Gew.-% Chlorgehalt), das im Kunststoff (PVC) sehr gut dispergierbar ist und transparente und farbstarke Färbungen liefert.

## Patentansprüche

1. Verfahren zur Feinverteilung von Kupferphthalocyaninrohpigmenten, dadurch gekennzeichnet, daß man grobkristalline Kupferphthalocyaninrohpigmente zunächst einer Trockenmahlung unterwirft und die dabei erhaltenen feinteiligen Präpigmente in wäßriger Suspension und unter Zusatz von 0,1 bis 5 Gew.-%, bezogen auf das gesamte Mahlgut, eines in Bezug auf die Verfahrensbedingungen inerten organischen Lösemittels auf einer Rührwerkskugelmühle, die mit einer Leistungsdichte von mehr als 2,5 kW pro Liter Mahlraum und einer Rührwerksumfangsgeschwindigkeit von mehr als 12 m/s betrieben wird, unter der Einwirkung von Mahlkörpern vom Durchmesser kleiner oder gleich 1 mm naßvermahlt.

2. Verfahren nach Anspruch 1, dadurch gekennzeichnet, daß man vor der Trockenmahlung ein Mahlhilfsmittel, vorzugsweise ein Wachs, zusetzt.

3. Verfahren gemäß Anspruch 2, dadurch gekennzeichnet, daß man das Mahlhilfsmittel in einer Menge von 0,1 bis 10 Gew.-%, vorzugsweise 2,5 bis 7,5 Gew.-%, bezogen auf das grobkristalline Rohpigment, zusetzt.

4. Verfahren gemäß einem oder mehreren der Ansprüche 1 bis 3, dadurch gekennzeichnet, daß man die Trockenmahlung bei einem Mahlgutfüllgrad von weniger als 250 g Mahlgut pro Liter freiem Volumen der Mahlkörperschüttung, vorzugsweise bei 50 bis 150 g/l, durchführt.

5. Verfahren gemäß einem oder mehreren der Ansprüche 1 bis 4, dadurch gekennzeichnet, daß die Trockenmahlung in einer Schwingmühle mit einem Mahlkörperfüllgrad von über 60 Vol.-% durchgeführt wird.

6. Verfahren gemäß einem oder mehreren der Ansprüche 1 bis 4, dadurch gekennzeichnet, daß die Trockenmahlung in einer Rollmühle mit einem Mahlkörperfüllgrad von 40 bis 60 Vol.-% durchgeführt wird.

7. Verfahren gemäß einem oder mehreren der Ansprüche 1 bis 6, dadurch gekennzeichnet, daß man bei der Trockenmahlung Mahlkörper vom Durchmesser 3 bis 20 mm verwendet.

8. Verfahren gemäß einem oder mehreren der Ansprüche 1 bis 7, dadurch gekennzeichnet, daß man bei der Naßmahlung Mahlkörper vom Durchmesser 0,2 bis 0,8 mm, vorzugsweise 0,3 bis 0,5 mm, einsetzt.

9. Verfahren gemaß einem oder mehreren der Ansprüche 1 bis 8, dadurch gekennzeichnet, daß die Präpigmentkonzentration im Mahlgut der Naßmahlung 5 bis 35 Gew.-%, vorzugsweise 10 bis 20 Gew.-%, beträgt.

10. Verfahren gemäß einem oder mehreren der Ansprüche 1 bis 9, dadurch gekennzeichnet, daß man ein oder mehrere grobkristalline Kupferphthalocyaninrohpigmente der α- oder β-Phase einsetzt, die unsubstituiert sind oder 1 bis 4 Sulfonsäure- oder Carbonsäuregruppen, 1 bis 15 Chloratome und/oder 1 bis 12 Bromatome im Molekül enthalten.

11. Verwendung der nach einem oder mehreren der Ansprüche 1 bis 10 hergestellten Pigmente als Farbmittel zum Pigmentieren von Lacken, Druckfarben und Kunststoffen.

12. Verwendung nach Anspruch 11, dadurch gekennzeichnet, daß die Kunststoffe als plastische Massen, Schmelzen oder Spinnlösungen vorliegen.

13. Verwendung nach Anspruch 11 oder 12, dadurch gekennzeichnet, daß die Kunststoffe Celluloseether oder -ester, natürliche Harze, Polymerisationsharze oder Kondensationsharze, Aminoplaste, Alkydharze, Acrylharze, Phenoplaste, Polycarbonate, Polyolefine, Polyvinylchlorid, Polyacrylnitril, Polyacrylsäureester, Polyamide, Polyurethane oder Polyester, Gummi, Casein, Silikon oder Silikonharze, oder Mischungen davon sind.
